# EUROPEAN PATENT APPLICATION

(11) **EP 4 716 076 A1**
(43) Date of publication of application: **25.03.2026**
(21) Application number: 24201313.4
(22) Date of filing: 19.09.2024
(51) Int. Cl.: H02M 1/00, H02M 3/335, H02M 5/22

(54) **SOLID-STATE TRANSFORMER AND SYSTEM**

(71) Applicant: Hitachi Energy Ltd, 8050 Zürich (CH)
(72) Inventor: Mogorovic, Marko, 1205 Geneva (CH); Gradinger, Thomas Bernhard, 5032 Aarau Rohr (CH)
(74) Representative: Epping - Hermann - Fischer

(57) **Abstract**

A solid-state transformer (1) is specified, comprising
- at least two modules (2) having a first side (3) and a second side (4), wherein each module (2) comprises
- at least two sub-modules (22), each comprising a first converter (5) at the first side (3) and a second converter (6) at the second side (4), wherein
- the first converter (5) is connected to the second converter (6) by a transformer, and
- the at least two sub-modules (22) are connected in parallel at the first side (3), and wherein

- the at least two modules (2) are connected in series at the first side (3).

Furthermore, a system is specified.

## Description

The present disclosure relates to a solid-state transformer and a system.

For typical high-power electric applications such as electric vehicle charging, batteries, hydrogen, wind and solar power require actively controlled bi-directional galvanically insulated conversion at medium voltage, MV, level.

Embodiments of the disclosure relate to a solid-state transformer which is particularly efficient.

This is achieved by the subject-matter of the independent claim. Further embodiments are evident from the dependent claims and the following description.

The solid-state transformer is described. Exemplarily, the solid-state transformer is configured to transform electrical energy from a first voltage level to a second voltage level. In particular, the solid-state transformer is a bidirectional transformer. This means that the solid-state transformer is additionally configured to transform electrical energy from the second voltage level the first voltage level.

The solid-state transformer comprises, for example, power semiconductor devices. This means that the solid-state transformer is a power electronic transformer. At least some of the power semiconductor devices particularly are based on a semiconductor material. Each power semiconductor device can comprise insulated gate bipolar transistors, IGBTs, metal oxide semiconductor field-effect transistors, MOSFETs, and/or gallium nitride, GaN, transistors.

The term "power" here and in the following refers, for example, to power semiconductor devices particularly comprised by the solid-state transformer adapted for processing voltages and currents of more than 100 V and/or more than 5 A, exemplarily voltages of up to 10 kV and electrical currents of up to 10 kA.

According to an embodiment, the solid-state transformer comprises at least two modules having a first side and a second side. Exemplarily, each module has an input side which is characteristic of the first side, and each module has an output side which is characteristic of the second side. In particular, the first side and the second side are located opposite to one another.

As the modules can work bidirectionally, the input side can be the output side and the output side can be the input side. Thus, the term "output" and "input" are used herein in particular for referencing different sides, e.g. the first side and the second side, of the modules.

Preferably, the first side is a medium voltage side and the second side is a low voltage side of the solid-state transformer. Exemplarily, elements of the solid-state transformer at the medium voltage side are configured to process electric energy of a medium voltage range and elements of the solid-state transformer at the low voltage side are configured to process electric energy of a low voltage range. Therefore, the indication of the first side and the second side can be characteristic for a geometrical relationship of the elements and/or a functional relationship of the elements.

According to the embodiment of the solid-state transformer, each module comprises at least two sub-modules, each comprising a first converter at the first side and a second converter at the second side. Exemplarily, the first converter is of a first type and the second converter is of a second type, wherein the first type and the second type are different from one another. The type is, for example, characteristic of a voltage conversion from an alternating current, AC, to a direct current, DC, or vice versa. This means that, if the first type is indicative of a DC to AC conversion, the second type is indicative of an AC to DC conversion, and vice versa.

According to the embodiment of the solid-state transformer, the first converter is connected to the second converter by a transformer. The transformer has, for example, a first side, to which the first converter is connected, and a second side, to which the second converter is connected. The first side of each module particularly faces the first side of the transformer, and the second side of each module particularly faces the second side of the transformer.

Exemplarily, the transformer comprises a primary winding and a secondary winding and a core. The primary winding is magnetically connected to the core, and the secondary winding is magnetically connected to the core. In particular, the first winding and the second winding are each wound around the core. Each of the primary winding and the secondary winding has a number of turns. The transformation of the electrical energy from the first voltage level to the second voltage level and vice versa is dependent on a ratio between the number of turns, particularly between the number of turns of the primary winding and the number of turns of the secondary winding.

Exemplarily, each module has an input port and at least one, particularly at least two, output ports. The input port of the module is located at the first side, and the output port of the module is located at the second side.

Exemplarily, the first converter has an input port and an output port. The input port of the first converter faces away from the transformer, and the output port of the first converter is connected to the transformer. Exemplarily, the input port of the module is connected to the input port of the respective first converter. Exemplarily, the second converter has an input port and an output port. The input port of the second converter is connected to the transformer, and the output port of the second converter faces away from the transformer. Exemplarily, the output port of the first converter is connected to the primary winding, and the input port of the second converter is connected to the secondary winding. Exemplarily, the output port of the module is connected to the output port of the respective second converter.

As the modules and converters can work bidirectionally, the respective input ports can be the output ports and the respective output ports can be the input ports. Particularly, the terms "output" and "input" are used herein for referencing different sides.

According to the embodiment of the solid-state transformer, the at least two sub-modules are connected in parallel at the first side. In particular, the sub-modules of one module are connected in parallel via the input ports of the respective first converters and thus the input ports of the modules.

According to the embodiment of the solid-state transformer, the at least two modules are connected in series at the first side. The input ports of the modules are connected exemplarily in series. In particular, the modules are connected in series via the input ports of the respective first converters and thus the input ports of the modules.

Exemplarily, all the modules comprise the same sub-modules. Advantageously, a voltage scaling is achieved by serialization of appropriate number of modules on the first side.

The solid-state transformer having several modules being connected in series with parallel connected sub-modules advantageously provides a power flow equalization within the modules, e.g. by connecting the submodules at the second side, based on the topology of the sub-modules, as well as by using always the same basic building blocks for the modules, i.e. the sub-modules. Such a solid-state transformer is advantageously fully modular, scalable, and allows for standardization of the basic building blocks, e.g. the sub-modules. Advantageously, a simple change of how the sub-modules and/or modules are stacked allows for maximum flexibility in terms of control.

According to a further embodiment of the solid-state transformer, the first converter comprises a first direct current/alternating current, DC/AC, converter. Exemplarily, the first DC/AC converter is configured to convert an input DC voltage into an output AC voltage and vice versa. A DC side of the first DC/AC converter faces away from the transformer and an AC side of the first DC/AC converter is connected to the transformer, e.g. the primary winding. The DC side of the first DC/AC converter comprises, for example, the input port of the first converter.

According to a further embodiment of the solid-state transformer, the second converter comprises a second AC/DC converter. Exemplarily, the second AC/DC converter is configured to convert an input AC voltage into an output DC voltage and vice versa. An AC side of the second AC/DC converter is connected to the transformer, e.g. the secondary winding, and a DC side of the second AC/DC converter faces away from the transformer. The DC side of the second AC/DC converter comprises, for example, the output port of the second converter.

According to a further embodiment of the solid-state transformer, at least one sub-module comprises the first converter comprising a first AC/DC converter and the first DC/AC converter. This means in particular that the first converter is a first AC/DC/DC/AC converter comprising the first AC/DC converter and the first DC/AC converter.

Exemplarily, an AC side of the first AC/DC converter faces away from the first DC/AC converter. In particular, the AC side of the first AC/DC converter comprises the input port of the first converter. A DC side of the first AC/DC converter is connected to the DC side of the first DC/AC converter.

According to a further embodiment of the solid-state transformer, the first DC/AC converter is connected to the transformer. For example, the AC side of the first DC/AC converter is connected to the transformer, particularly the primary winding. In particular, the AC side of the first DC/AC converter comprises the output port of the first converter.

According to a further embodiment of the solid-state transformer, at least one sub-module comprises the second converter comprising the second AC/DC converter and a second DC/AC converter. This means in particular that the second converter is a second AC/DC/DC/AC converter comprising the second AC/DC converter and the second DC/AC converter.

In particular, an AC side of the second DC/AC converter comprises the output port of the second converter. The DC side of the second AC/DC converter is connected to a DC side of the second DC/AC converter.

According to a further embodiment of the solid-state transformer, the second AC/DC converter is connected to the transformer. For example, the AC side of the second AC/DC converter is connected to the transformer, particularly the secondary winding. In particular, the AC side of the second AC/DC converter comprises the input port of the second converter.

Exemplarily, a first type of the sub-module comprises the first DC/AC converter as the first converter and the second AC/DC converter as the second converter, wherein the respective AC sides are connected to the transformer.

Exemplarily, a second type of the sub-module comprises the first AC/DC/DC/AC converter as the first converter and the second AC/DC converter as the second converter, wherein the respective AC sides are connected to the transformer.

Exemplarily, a third type of the sub-module comprises the first AC/DC/DC/AC converter as the first converter and the second AC/DC/DC/AC converter as the second converter, wherein the respective AC sides are connected to the transformer.

For example, all modules comprise the same sub-modules, wherein each module can comprise the same or different types of sub-modules.

According to a further embodiment of the solid-state transformer, at least two sub-modules of different modules are connected at the second side in series or in parallel. Exemplarily, the output ports of the second converters of the at least two sub-modules of different modules are connected in series or in parallel.

Advantageously, power balancing and/or an exchange of electrical energy between different modules is thus achieved. Due to the serial connection of at least two sub-modules at the second side of different modules, this topology can be advantageously used to adapt a voltage at the output port of the corresponding module. Due to parallel connection of at least two sub-modules at the second side of different modules, it is advantageously possible to circulate power from one module to another module to correct any loading disbalances.

According to a further embodiment of the solid-state transformer, at least two sub-modules of the same module are connected at the second side in series or in parallel. Exemplarily, the output ports of the second converters of the at least two sub-modules of the same module are connected in series or in parallel.

Due to such connection topologies, power balancing and/or an exchange of electrical energy between different sub-modules is thus advantageously achieved. In particular, the parallel connection of submodules on the second side allows for power balancing between different modules when submodules belong to different modules. Connection of submodules in parallel advantageously additionally achieves an increased power. Connection of submodules in series, advantageously achieves a predetermined low voltage level on the respective output port.

According to a further embodiment of the solid-state transformer, a matrix switch is connected to the sub-modules at the second side. Exemplarily, the output ports of the second converters are connected to the matrix switch.

Advantageously, a serial and/or parallel connection of the outputs of at least some of the second converters within a module and/or of different modules can be achieved with the matrix switch.

According to a further embodiment of the solid-state transformer, the solid-state transformer is a bidirectional solid-state transformer.

According to a further embodiment of the solid-state transformer, elements of the modules at the first side are configured to process electric energy of a medium voltage range, while elements of the modules at the second side are configured to process electric energy of a low voltage range.

The elements comprise, inter alia, the first converters and the respective ports. The medium voltage range is, for example, at least 1 kV or at least 2kV and/or at most 50 kV. The low voltage range is, for example, smaller than 2 kV or smaller than 1 kV.

According to a further embodiment of the solid-state transformer, the modules are configured to be connectable to a power grid at the first side. The power grid is configured, for example, to provide electric energy of the medium voltage range to the solid-state transformer. Exemplarily, the power grid is connected to the input ports of the modules.

According to a further embodiment of the solid-state transformer, the modules are configured to be connectable to at least one energy dispenser at the second side. The energy dispenser is, for example, characteristic of a charging station of an electric vehicle. Exemplarily, the energy dispenser is connected to a respective output port of a respective module.

According to a further embodiment of the solid-state transformer, the modules are configured to be further connectable to at least one energy storage and/or at least one energy generator at the second side. Exemplarily, the energy storage and/or the energy generator is/are connected to a respective output port of a respective module.

Advantageously, by using also energy storages and/or energy generators, electric energy can be provided also at the second side - for providing electric energy to the energy dispenser or the power grid.

A further embodiment relates to a system, in particular comprising a solid-state transformer as described herein above. Therefore, the features as described in connection with the system are also applicable for the solid-state transformer and vice versa.

According to an embodiment, the system comprises the solid-state transformer as described herein before.

According to the embodiment, the solid-state transformer is connected to a power grid at the first side, and the solid-state transformer is connected to at least one energy dispenser at the second side.

Exemplarily, the power grid comprises three phases. In particular, the three phases are formed of a first phase, a second phase and a third phase.

For example, each of the three solid state transformers is connected between one of the three phases and a reference potential. For example, the reference potential is a ground potential. Exemplarily, the three solid-state transformers are formed of a first solid-state transformer, a second solid-state transformer and a third solid-state transformer. The first solid-state transformer is in particular connected between the first phase and the reference potential. The second solid-state transformer is in particular connected between the second phase and the reference potential. The third solid-state transformer is in particular connected between the third phase and the reference potential.

For example, each of the three solid state transformers is connected between two of the three phases. The first solid-state transformer is in particular connected between the first phase and the second phase. The second solid-state transformer is in particular connected between the second phase and the third phase. The third solid-state transformer is in particular connected between the third phase and the first phase.

Advantageously, due to such arrangements of the solid-state transformers with respect to the phases, the solid-state transformer is connectable to a 3-phase AC grid.

According to a further embodiment of the system, the solid-state transformer is further connected to at least one energy storage and/or at least one energy generator at the second side.

The accompanying Figures are included to provide a further understanding. In the Figures, elements of the same structure and/or functionality may be referenced by the same reference signs. It is to be understood that the embodiments shown in the Figures are illustrative representations and are not necessarily drawn to scale.
Figure 1 shows a schematic view of a solid-state transformer according to an exemplary embodiment.
Figures 2, 3 and 4 each show a schematic view of a sub-module of a solid-state transformer according to an exemplary embodiment.
Figure 5 shows a detailed schematic view of a solid-state transformer according to an exemplary embodiment.
Figure 6 shows a schematic diagram of an efficiency of a solid-state transformer according to an exemplary embodiment.
Figures 7 and 8 each shows a detailed schematic view of a solid-state transformer according to an exemplary embodiment.

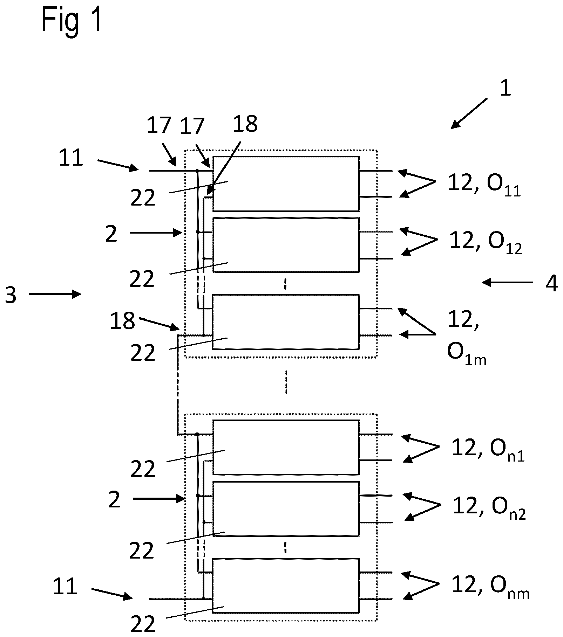

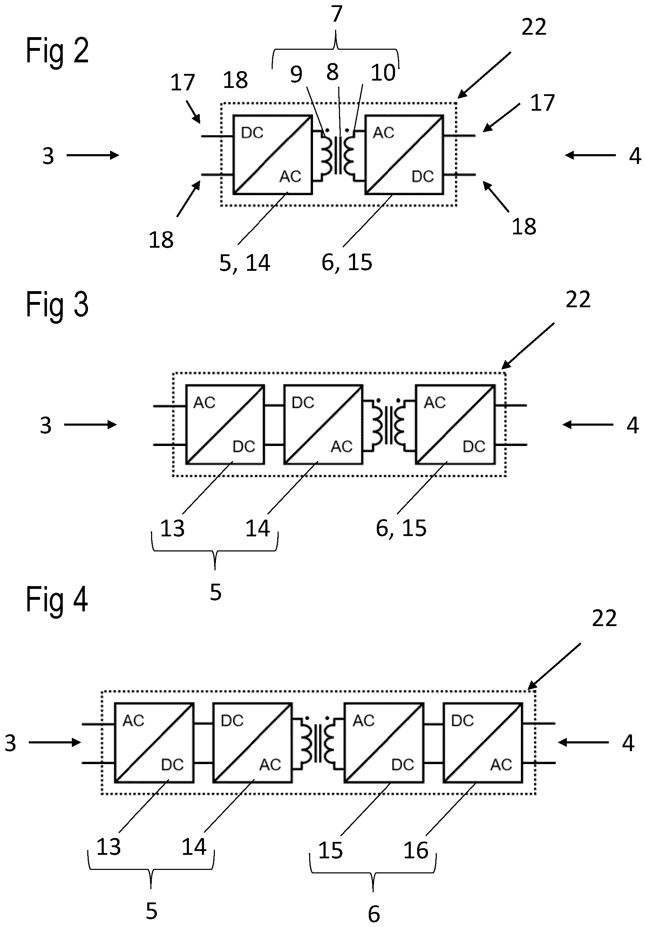

The solid-state transformer 1 according to the exemplary embodiment of Figure 1 comprises n modules 2, wherein each module has a first side 3 and a second side 4, arranged opposite to one another. The modules 2 are equal to one another, and each module 2 comprises m sub-modules 22, which are described in more detail in connection with Figures 2, 3, 4 and 5. n and m are natural numbers bigger than or equal to 2. n and m can be different or equal to one another.

The solid-state transformer 1 is configured to be connected to a power grid at the first side 3, in particular an AC power grid.

The modules 2 are connected in series at the first side 3. Each module 2 has an input port 11, comprising a first sub-port 17 and a second sub-port 18. The first sub-port 17 is characteristic of a first polarity type and the second sub-port 18 is characteristic of a second polarity type. The input port 11 of the module 2 is located at the first side 3. The power grid is configured to be connected to the input port 11 of the first module 2 and to the input port 11 of the last module 2. The first module 2 is the module 2 connected to a first terminal with a first polarity of the power grid, and the last module 2 is the module 2 connected to a second terminal with a second polarity different from the first polarity of the power grid. In particular, the power grid is configured to be connected to the first sub-port 17 of the first module 2, and the power grid is configured to be connected to the second sub-port 18 of the last module 2. Directly neighbouring modules 2 are connected with one another by the second sub-port 18 and the first sub-port 17, respectively, for achieving the serial connection of the modules 2.

The sub-modules 22 are connected in parallel at the first side 3. Each sub-module 22 has an input port 11, comprising a first sub-port 17 and a second sub-port 18. The input port 11 of the module 2 is connected to the input port 11 of the first sub-module 22 and to the input port 11 of the last sub-module 22. The first sub-module 22 is the sub-module 22 closest to the first sub-port 17 of the module 2, and the last sub-module 22 is the sub-module 22 closest to the second sub-port 18 of the module 2. In particular, the input port 11, particularly the first sub-port 17, of the module 2 is connected to all sub-ports 17 of the sub-modules 22 of the module 2. Particularly, the input port 11, particularly the second sub-port 18, of the module 2 is connected to all second sub-ports 18 of the sub-modules 22 of the module 2. The first sub-module 22, in particular the first sub-port 17 thereof, is connected to all neighbouring sub-modules 22, in particular to all respective first sub-ports 17 thereof. The first sub-module 22, in particular the second sub-port 18 thereof, is connected to all neighbouring sub-modules 22, in particular to all respective second sub-ports 18 thereof. Such a connection enables the parallel connection of the sub-modules 22 at the first side 3.

The solid-state transformer 1 is configured to be connected to energy dispensers at the second side 4.

Each module 2 has at least one, according to Figure 1 in particular three, output ports 12, each comprising a first sub-port 17 and a sub-second port 18. The output ports 12 of the module 2 are located at the second side 4. Each output port 12 is configured to be connected to one of the energy dispensers.

In particular, the first side 3 is configured to process electric energy of a medium voltage range, and the second side 4 is configured to process electric energy of a low voltage range.

The sub-modules 22 according to Figures 2, 3 and 4 each comprise a first converter 5 at the first side 3 and a second converter 6 at the second side 4, wherein the first converter 5 is connected to the second converter 6 by a transformer 7. The transformer 7 comprises a primary winding 9 and a secondary winding 10 and a core 8. In particular, each sub-module 22 comprises one single transformer 7.

The first converter 5 has an input port 11, comprising a first sub-port 17 and a second sub-port 18. The input port 11 of the respective sub-module 22 is connected to the input port 11 of the first converter 5. The first converter 5 has an output port 12, comprising a first sub-port 17 and a second sub-port 18. The output port 12 of the first converter 5 is connected to the primary winding 9.

The second converter 6 has an input port 11, comprising a first sub-port 17 and a second sub-port 18, wherein the input port 11 of the second converter 6 is connected to the secondary winding 10. The second converter 6 has an output port 12, comprising a first sub-port 17 and a second sub-port 18, wherein the output port 12 of the second converter 6 is configured to be connected to one of the energy dispensers.

The sub-module 22 according to Figure 2 comprises a first DC/AC converter 14 as the first converter 5. A DC side of the first DC/AC converter 14 comprises the input port 11 of the first converter 5 and an AC side of the first DC/AC converter 14 comprises the output port 12 of the first converter 5, which is connected to the primary winding 9.

In particular, the sub-module 22 according to Figure 2 is a sub-module 22 of a first type comprising the first DC/AC converter 14 as the first converter 5 and the second AC/DC converter 15 as the second converter 6, wherein the respective AC sides are connected to the transformer 6.

The sub-module 22 according to Figure 3 comprises a first AC/DC converter 13 and a first DC/AC converter 14 as the first converter 5. An AC side of the first AC/DC converter 13 comprises the input port 11 of the first converter 5, and a DC side of the first AC/DC converter 13 is connected to a DC side of the first DC/AC converter 14. An AC side of the first DC/AC converter 14 comprises the output port 12 of the first converter 5, which is connected to the primary winding 9.

The second converter 6 according to Figure 3 is equal to the second converter 6 according to Figure 2.

In particular, the sub-module 22 according to Figure 3 is a sub-module 22 of a second type comprising a first AC/DC/DC/AC converter as the first converter 5 and the second AC/DC converter 15 as the second converter 6, wherein the respective AC sides are connected to the transformer 7.

The first converter 5 according to Figure 4 is equal to the second converter 6 according to Figure 3.

The sub-module 22 according to Figure 4 comprises a second AC/DC converter 15 and a second DC/AC converter 16 as the second converter 6. An AC side of the second AC/DC converter 15 comprises the input port 11 of the second converter 6, which is connected to the secondary winding 10, and a DC side of the second AC/DC converter 15 is connected to a DC side of the second DC/AC converter 16. An AC side of the second DC/AC converter 16 comprises the output port 12 of the first converter 5.

In particular, the sub-module 22 according to Figure 4 is a sub-module 22 of a third type comprising the first AC/DC/DC/AC converter as the first converter 5 and the second AC/DC/DC/AC converter as the second converter 6, wherein the respective AC sides are connected to the transformer 7.

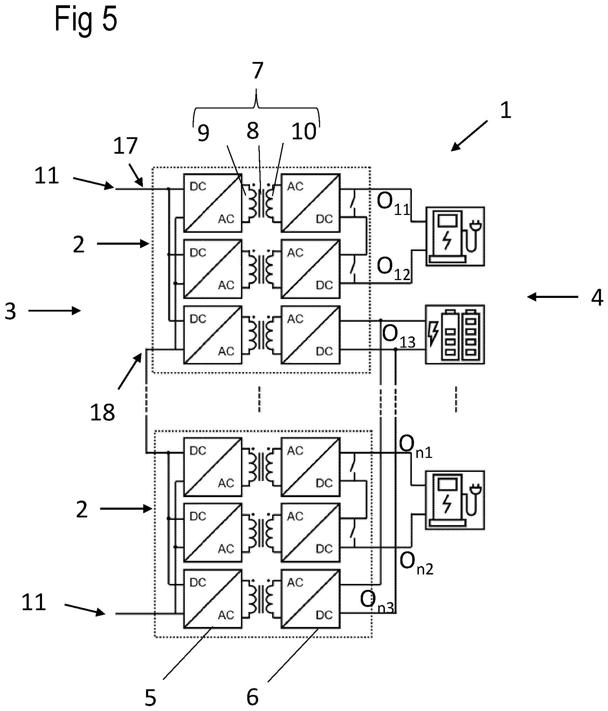

The solid-state transformer 1 according to the exemplary embodiment of Figure 5 comprises n modules 2, wherein each module 2 comprises three sub-modules 22, particularly a first sub-module, a second sub-module and a third sub-module, of the first type, as described in Figure 2.

The second converters 6, in particular the output ports 12 thereof, of the first sub-module and the second sub-module are connected in series. The second converters 6, in particular the output ports 12 thereof, of the first sub-module and the second sub-module are connected to an energy dispenser. The first sub-port 17 of the output port 12 of the first sub-module is connected to the energy dispenser, and the energy dispenser is connected to the second sub-port 18 of the output port 12 of the second sub-module. The second sub-port 18 of the output port 12 of the first sub-module is connected to the first sub-port 17 of the output port 12 of the second sub-module, thereby establishing a serial connection. Between the first and the second sub-ports 17, 18 of the first sub-module, a first switch is arranged, for electrically connecting the first sub-port 17 to the second sub-port 18 when closed and electrically disconnecting the first sub-port 17 from the second sub-port 18 when opened. Between the first and the second sub-ports 17, 18 of the second sub-module, a second switch is arranged, similar to the first switch.

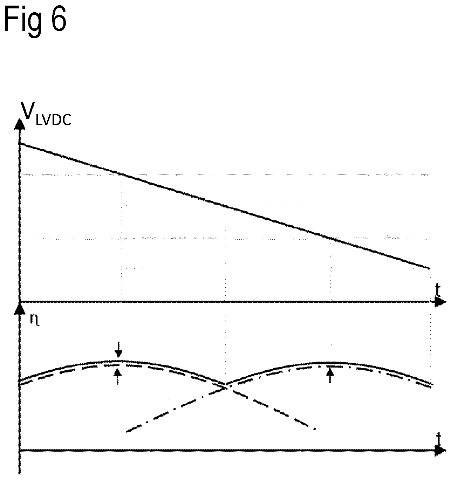

With such a serial connection of the output ports 12 of the sub-modules 22, an output voltage range trimming is advantageously achieved. Exemplarily, electric vehicles operate at different voltages in a very wide range, roughly 200 V to 1200 V. The serial topology can advantageously be used to match the output voltage of the module 2 to the respective energy dispenser, particularly to the electric vehicle. This is advantageously achieved by the connection of output ports 12 of two or more sub-modules 22 in series, e.g. O₁₁ and O₁₂. Depending on the voltage of the electric vehicle connected to the respective output port 12 of the module 2, one or more serialized output ports 12 of the respective sub-modules 22 can simply be shorted to decrease the nominal voltage at optimal conversion ratio. For example, if the voltage on each output port 12 of the sub-modules 22 in Figure 5 is 400 V, both O₁₁ and O₁₂ in series would provide 800 V at a nominal conversion ratio and a control range from 600-1000 V, whereas, if one of them was shorted, this would yield 400 V and a 200-600 V range, respectively, as shown in connection with Figure 6. This advantageously enables efficient wide voltage coverage.

Note that the sub-module 22 that is shorted by one of the switches is not converting electrical energy, and in that mode of operation a maximum power of the converter is decreased for that amount. Also, an application power is always proportional to the voltage, so a matching is advantageously achieved.

The second converters 6, in particular the output ports 12 thereof, of the third sub-module of the first module 2 and the third sub-module of the nth module 2, and particularly all other modules 2, are connected in parallel. The second converters 6, in particular the output ports 12 thereof, of the third sub-module of the first module 2 and the third sub-module of the nth module 2, and particularly all other modules i, where i is from 1 to n, are connected to an energy storage. The first sub-port 17 of the output port 12 of the third sub-module of the first module 2 is connected to the energy storage, and the first sub-port 17 of the output port 12 of the third sub-module of the first module 2 is connected to the first sub-port 17 of the output port 12 of the third sub-module of the nth module 2. The second sub-port 18 of the output port 12 of the third sub-module of the first module 2 is connected to the energy storage, and the second sub-port 18 of the output port 12 of the third sub-module of the first module 2 is connected to the second sub-port 18 of the output port 12 of the third sub-module of the nth module 2, and particularly all other modules i, where i is from 1 to n-1, thereby establishing a parallel connection. Each module 2 particularly needs to have at least one submodule that is connected in parallel together with submodules 22 from other modules 2 to achieve the power balancing.

Such a parallel connection advantageously enables balancing and/or an exchange of electrical energy between different modules 2. Due to parallel connection of output ports 12 of different sub-modules 22 of different modules 2, in this case Oᵢ₃, where i is a natural number between 1 and n, it is possible to circulate electric energy from one module 2 i to another module 2 j to correct any loading disbalance.

By using the energy storage, advantageously, an energy buffering is achieved. In particular, this allows multiple separate outputs of the sub-modules 22 being used for local battery storage by the respective energy storage to provide energy buffering, i.e. peak power shaving, functionality. This is advantageously important for remote electric vehicle charging via the respective energy dispensers with high-power where grid capacity is not sufficient. The outputs of the respective sub-modules 22 used for balancing electric energy, i.e. load balancing, can be also directly connected to an energy storage to provide this feature.

For the sake of simplicity, in the exemplarily embodiment of Figure 5, each energy dispenser is connected to several output ports 12 of one module 2. It is possible that at least some or each energy dispenser is connected to different output ports 12 of different sub-modules 22 of different modules 2. This advantageously allows to better equalize the electric energy, i.e. the load, of each module 2 and minimize the power circulation needed for balancing electric energy amongst the modules 2.

In the diagram according to Figure 6, an output DC voltage on the second side 4, V_{LVDC}, is indicated on the y-axis in the upper part, and an efficiency η is indicated on the y-axis in the lower part. The efficiency drops exponentially when moving away from a nominal voltage, e.g. a conversion ratio, of the respective module 2. The nominal voltages are indicated by dashed dotted lines in the upper part. In the lower part the left dashed curve indicates an efficiency when all sub-modules 22 are connected, and the right dashed dotted curve indicates an efficiency when half of the sub-modules 22 are shorted, as explained in Figure 5.

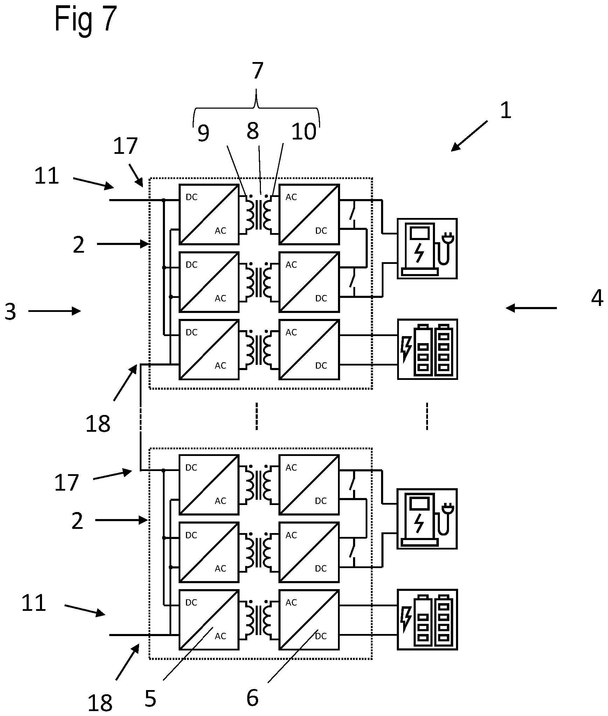

The solid-state transformer 1 according to the exemplary embodiment of Figure 7 has in contrast to the solid-state transformer 1 of Figure 5 no interconnections of the output ports 12 of the second converters 6 between different modules 2.

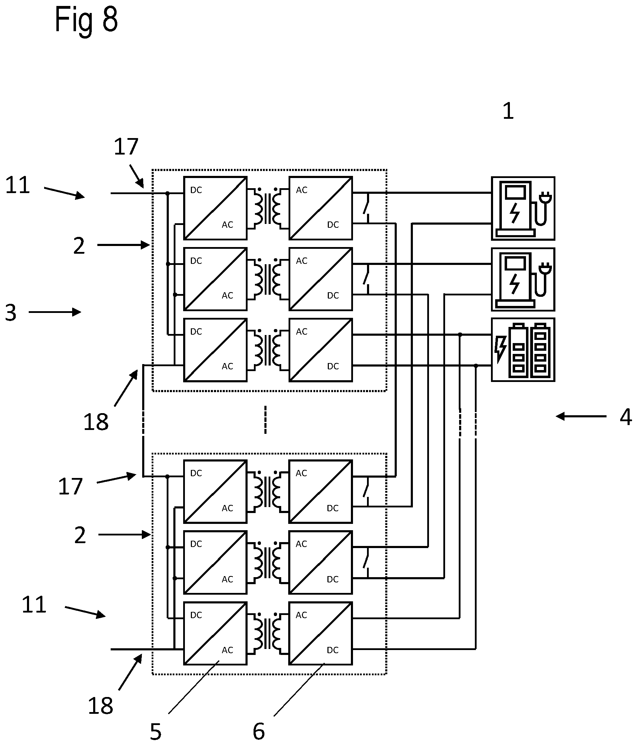

The solid-state transformer 1 according to the exemplary embodiment of Figure 8 has in contrast to the solid-state transformer 1 of Figure 7 interconnections of the output ports 12 of the second converters 6 between different modules 2. In contrast to the solid-state transformer 1 of Figure 5, energy dispensers are connected to the serial connections of sub-modules 22 of different modules 2.

The exemplary embodiments, in particular features of the exemplary embodiments, of the Figures can be combined with one another.

### Reference Signs

- 1: solid-state transformer
- 2: module
- 3: first side
- 4: second side
- 5: first converter
- 6: second converter
- 7: transformer
- 8: core
- 9: primary winding
- 10: secondary winding
- 11: input port
- 12: output port
- 13: first AC/DC converter
- 14: first DC/AC converter
- 15: second AC/DC converter
- 16: second DC/AC converter

- 17: first sub-port
- 18: second sub-port

- 22: sub-module

## Claims

1. Solid-state transformer (1), comprising
- at least two modules (2) having a first side (3) and a second side (4), wherein each module (2) comprises
- at least two sub-modules (22), each comprising a first converter (5) at the first side (3) and a second converter (6) at the second side (4), wherein
- the first converter (5) is connected to the second converter (6) by a transformer (6), and
- the at least two sub-modules (22) are connected in parallel at the first side (3), and wherein
- the at least two modules (2) are connected in series at the first side (3).

2. Solid-state transformer (1) according to claim 1, wherein
- the first converter (5) comprises a first direct current/alternating current, DC/AC, converter, and
- the second converter (6) comprises a second AC/DC converter (15) .

3. Solid-state transformer (1) according to one of claims 1 or 2, wherein
- at least one sub-module (22) comprises the first converter (5) comprising a first AC/DC converter (13) and the first DC/AC converter (14), and
- the first DC/AC converter (14) is connected to the transformer (7).

4. Solid-state transformer (1) according to one of claims 1 to 3, wherein
- at least one sub-module (22) comprises the second converter (6) comprising the second AC/DC converter (15) and a second DC/AC converter (16), and
- the second AC/DC converter (15) is connected to the transformer (7).

5. Solid-state transformer (1) according to one of claims 1 to 4, wherein
- at least two sub-modules (22) of different modules (2) are connected at the second side (4) in series or in parallel.

6. Solid-state transformer (1) according to one of claims 1 to 5, wherein
- at least two sub-modules (22) of the same module (2) are connected at the second side (4) in series or in parallel.

7. Solid-state transformer (1) according to one of claims 1 to 6, wherein
- a matrix switch is connected to the sub-modules (22) at the second side (4).

8. Solid-state transformer (1) according to one of claims 1 to 7, wherein
- the solid-state transformer (1) is a bidirectional solid-state transformer.

9. Solid-state transformer (1) according to one of claims 1 to 8, wherein
- elements of the modules (2) at the first side (3) are configured to process electric energy of a medium voltage range, and
- elements of the modules (2) at the second side (4) are configured to process electric energy of a low voltage range.

10. Solid-state transformer (1) according to one of claims 1 to 9, wherein
- the modules (2) are configured to be connectable to a power grid at the first side (3).

11. Solid-state transformer (1) according to one of claims 1 to 10, wherein
- the modules (2) are configured to be connectable to at least one energy dispenser at the second side (4).

12. Solid-state transformer (1) according to claim 11, wherein
- the modules (2) are configured to be further connectable to at least one energy storage and/or at least one energy generator at the second side (4).

13. System, comprising
- the solid-state transformer (1) according to one of claims 1 to 12, wherein
- the solid-state transformer (1) is connected to a power grid at the first side (3), and
- the solid-state transformer (1) is connected to at least one energy dispenser at the second side (4).

14. System according to claim 13, wherein
- the solid-state transformer (1) is further connected to at least one energy storage and/or at least one energy generator at the second side (4).
